# EUROPÄISCHE PATENTSCHRIFT

(11) **EP 3 106 711 B1**
(45) Veröffentlichungstag und Bekanntmachung des Hinweises auf die Patenterteilung: **13.11.2019**
(21) Anmeldenummer: 16174366.1
(22) Anmeldetag: 14.06.2016
(51) Int. Cl.: F16F 15/121, F16D 3/76, F16D 3/12, F16D 3/66, F16F 15/133

(54) **DREHELASTISCHE WELLENKUPPLUNG**
PIVOTABLE ELASTIC SHAFT COUPLING
ACCOUPLEMENT D'ARBRE ÉLASTIQUE ROTATIF

(30) Priorität: 16.06.2015 AT 505002015
(43) Veröffentlichungstag der Anmeldung: 21.12.2016
(73) Patentinhaber: Tectos GmbH, 8054 Graz (AT)
(72) Erfinder: HÖFLER, Dieter, 8020 Graz (AT); EDLER, Christoph, 8020 Graz (AT); PALZENBERGER, Andreas, 8502 Lannach (AT)
(74) Vertreter: Babeluk, Michael

(56) Entgegenhaltungen:
- WO-A1-2005/028899
- WO-A2-2013/057728
- AT-A1- 507 600
- DE-A1-102009 039 989

## Beschreibung

Die Erfindung bezieht sich auf eine drehelastische Wellenkupplung mit einem ersten Kupplungsteil und einem zweiten Kupplungsteil, die gegeneinander verdrehbar gelagert sind, und zumindest einer Federanordnung, wobei die Wellenkupplung zumindest eine Kassette aufweist, die mit dem zweiten Kupplungsteil lösbar verbunden ist und in der eine Federanordnung gelagert ist, wobei die Kassette zusammen mit der darin gelagerten Federanordnung ein austauschbares Modul bildet.

Im Stand der Technik sind Zweimassenschwungräder mit Bogenfedern bekannt. Diese dienen der Reduktion der Drehschwingungen von Antriebssträngen von Fahrzeugen.

Beispielsweise offenbart die DE 3 841 639 A1 eine Einrichtung zum Dämpfen von Schwingungen im Antriebsstrang eines Kraftfahrzeuges. Zwischen zwei relativ zueinander verdrehbar gelagerten Schwungradelementen wird eine Dämpfungsvorkehrung vorgesehen, wobei als Federn Schraubenfedern verwendet werden.

Aus der DE 19623184 A1 und der EP 0 626 523 B1 sind zweistufige drehelastische Wellenkupplungen mit Elastomerkupplung mit mehreren in Reihe geschalteten Elastomerfedern bekannt. Weiters ist aus der WO 03/044 389 A1 ein Zweimassenschwungrad mit einer Primärmasse und einer Sekundärmasse bekannt, welche drehelastisch über eine Torsionsdämpfereinrichtung verbunden sind.

Die AT 507 600 A1 beschreibt eine Drehmomentübertragungseinrichtung für einen Antriebsstrang eines Fahrzeuges mit einem ersten Kupplungsteil und einem zweiten Kupplungsteil, wobei zwischen den beiden Kupplungsteilen ein elastisches Element angeordnet ist. Um das Drehschwingungsverhalten der Drehmomentübertragungseinrichtung sehr rasch und einfach einstellen zu können, sind zumindest zwei als austauschbare Module ausgebildete elastische Elemente in Serie hintereinandergeschaltet.

Die DE 10 2009 039 989 A1 offenbart eine Riemenschreibe zum Abzweigen mechanischer Energie eines Verbrennungsmotors mittels eines Riemens, wobei zwischen einem Eingangsteil und einem Ausgangsteil eine Federdämpfeinrichtung angeordnet ist.

Die WO 2013/057728 A2 offenbart ein Zweimassenschwungrad mit einer zweistufigen Federanordnung und einem Reibungsdämpfersystem.

Nachteilig an bestehenden Kupplungen ist, dass diese nicht bzw. nur mit hohem Aufwand an ein zu erwartendes Schwingungsverhalten angepasst werden können.

Ziel der vorliegenden Erfindung besteht darin, eine Wellenkupplung bereitzustellen, die diesen Nachteil nicht aufweist und bei der mit einfachen Mitteln und nur geringem Aufwand eine individuelle Anpassung der Dämpfungseigenschaften für eine bestimmte Anwendung ermöglicht wird. Eine solche Anpassung soll möglichst ohne Veränderung der Grundkonstruktion einer Kupplung gewährleistet werden.

Dieses Ziel wird mit einer eingangs erwähnten Wellenkupplung dadurch erreicht, dass die Wellenkupplung zumindest zwei Kassetten aufweist, die mit dem zweiten Kupplungsteil lösbar verbunden sind und in denen jeweils eine Federanordnung gelagert ist, wobei jede Kassette zusammen mit der darin gelagerten Federanordnung ein austauschbares Modul bildet und dass eine erste Kassette einen größeren Außendurchmesser als eine zweite Kassette aufweist, wobei die erste Kassette eine Ausnehmung aufweist, in der die zweite Kassette eingesetzt ist und wobei die Wellenkupplung zumindest einen Mitnehmer aufweist, der mit dem ersten Kupplungsteil verbunden ist und mit der Federanordnung zusammenwirkt.

Es handelt sich somit um eine modular aufgebaute Wellenkupplung: Die Kassette samt darin angeordneter Federanordnung bildet ein Dämpfungsmodul das als Ganzes in bzw. aus der Kupplung ein- bzw. ausbaubar ist. Durch diese Maßnahme wird ermöglicht, dass die aus Kassette und Federanordnung gebildete Einheit als vorgefertigtes und kompaktes Modul in die Kupplung ein- bzw. ausgebaut werden kann.

Für eine erfindungsgemäße Wellenkupplung kann ein Bausatz aus mehreren modularen (Dämpfungs-)Modulen zur Verfügung gestellt werden. Diese Module weisen im Wesentlichen dieselbe Außenkontur auf (sind somit gleichermaßen an entsprechender Stelle der Wellenkupplung einbaubar), besitzen aber unterschiedliche Dämpfungseigenschaften. Insbesondere kann die Steifigkeit der in den Kassetten gelagerten Federanordnungen variieren.

Um nun eine Kupplung an ein Schwingungsverhalten anzupassen, muss lediglich das passende (Dämpfungs-)Modul gewählt und in die Kupplung eingebaut werden. Die Federanordnung kann aus mehreren Federelementen gebildet sein und ist in der Kassette gehalten bzw. fixiert, sodass sie (auch beim Ein- bzw. Ausbau) nicht herausfallen kann. Die Federanordnung wird in der Kassette unabhängig davon gehalten, ob das Modul in der Kupplung verbaut ist oder nicht.

Der Vorteil der erfindungsgemäßen Konstruktion besteht darin, dass durch die modulare Bauweise die Steifigkeit der (Feder)Kupplung variiert werden kann. Die modulare Bauweise der Wellenkupplung, in der die Kassette zusammen mit der darin gehaltenen Federanordnung ein als Ganzes austauschbares Modul bildet, erhöht die Flexibilität hinsichtlich der Einstellung der Steifigkeit bzw. Variation der Dämpfungseigenschaften. Bevorzugt ist die Kupplung eine modulare Bogenfederkupplung. Die Kassetten-Module können modular ausgetauscht werden und erlauben somit eine Anpassung der Steifigkeit auf unterschiedliche Anforderungen. Die Erfindung ist nicht auf Zweimassenschwungräder beschränkt, sondern kann zu unterschiedlichsten Dämpferkonzepten kombiniert werden.

Dadurch, dass jede Kassette zusammen mit der darin gelagerten Federanordnung ein austauschbares Modul bildet, wird nicht nur die Modularität erhöht, sondern - durch die Kombinationsmöglichkeit von Modulen - auch die Flexibilität hinsichtlich der Einstellung der drehelastischen Eigenschaften erweitert.

Dadurch, dass die erste Kassette einen größeren Außendurchmesser als die zweite Kassette aufweist, wobei die erste Kassette eine Ausnehmung aufweist, in der die zweite Kassette eingesetzt ist, ergibt sich eine platzsparende Konstruktion.

In einer bevorzugten Ausführungsform ist vorgesehen, dass innerhalb der Kassette(n) jeweils ein mit dem ersten Kupplungsteil lösbar verbundener Mitnehmer angeordnet ist, der Bestandteil des jeweiligen Moduls ist. Der mit der Federanordnung zusammenwirkende Mitnehmer ist somit bereits im Modul integriert. Ein gesonderter Einbau mit einem zusätzlichen Arbeitsschritt erübrigt sich damit.

In einer bevorzugten Ausführungsform ist vorgesehen, dass die Kassetten (unmittelbar) aneinander anliegen, wodurch eine kompakte Konstruktion erreicht wird.

In einer bevorzugten Ausführungsform ist vorgesehen, dass die Kassetten aneinander geflanscht und die innerhalb der Kassetten angeordneten Mitnehmer (ebenfalls) aneinander geflanscht sind, wobei die aneinander liegenden Flanschflächen der Kassetten im Wesentlichen in derselben Ebene liegen wie die aneinander liegenden Flanschflächen der Mitnehmer. Der Einbau der Module wird dadurch erleichtert.

In einer bevorzugten Ausführungsform ist vorgesehen, dass eine Kassette zwischen dem ersten Kupplungsteil und einer anderen Kassette eingezwängt ist. So müssen lediglich für eine Kassette Befestigungsmittel zur Befestigung an den zweiten Kupplungsteil vorgesehen werden.

In einer bevorzugten Ausführungsform ist vorgesehen, dass die Kassetten konzentrisch zueinander angeordnet sind.

In einer bevorzugten Ausführungsform ist vorgesehen, dass eine Kassette die darin gelagerte Federanordnung von beiden Seiten und/oder vollständig umschließt, wodurch die Federanordnungen sowohl im eingebauten als auch im freistehenden Zustand vor äußeren Einflüssen geschützt sind.

In einer bevorzugten Ausführungsform ist vorgesehen, dass eine Wand der Kassette zwischen der darin gelagerten Federanordnung und dem zweiten Kupplungsteil angeordnet ist. Diese Wand bildet eine (schützende) Trennung zwischen der Federanordnung und dem zweiten Kupplungsteil.

In einer bevorzugten Ausführungsform ist vorgesehen, dass an der Innenseite der zumindest einen Kassette zumindest ein Federanschlag zum Abstützen eines Federelementes der in der Kassette gelagerten Federanordnung ausgebildet ist. Die Kassette beinhaltet somit alle erforderlichen Funktionalitäten für die Verwirklichung der drehelastischen Eigenschaften.

In einer bevorzugten Ausführungsform ist vorgesehen, dass in der zumindest einen Kassette zumindest eine Federführungsbahn integriert ist, wobei vorzugsweise der Raum zwischen der Kassettenwand und der Federführungsbahn mit Fett gefüllt ist. Während die Federführungsbahn eine definierte Verformung der Federanordnung gewährleistet, wird durch das Fett die Geräuschübertragung und Abstrahlung vom Kassettengehäuse reduziert. Die Federführungsbahn kann z.B. formschlüssig an einem Federelement der Federanordnung anliegen.

In einer bevorzugten Ausführungsform ist vorgesehen, dass die zumindest eine Federanordnung zumindest eine, vorzugsweise zumindest zwei Bogenfedern umfasst. Die zumindest zwei Bogenfedern können im peripheren (Umfangs)Bereich der Kassette verlaufen. Vorzugsweise bilden sie dort einen vollständigen Ring aus.

In einer bevorzugten Ausführungsform ist vorgesehen, dass die Kassette(n) einen Flansch und/oder Zentrierungen aufweisen, insbesondere zur Befestigung an den zweiten Kupplungsteil und/oder an eine andere Kassette.

In einer bevorzugten Ausführungsform ist vorgesehen, dass die Kassette(n) jeweils in ihrem Zentrumsbereich einen Durchgang aufweist/-en, in dem das Drehlager zwischen erstem Kupplungsteil und zweitem Kupplungsteil angeordnet ist.

In einer bevorzugten Ausführungsform ist vorgesehen, dass die Kassette(n) in Form eines vorzugsweise ringförmigen Gehäuses ausgebildet ist/sind. Darin eingesetzte Bogenfedern (der Federanordnung) können dabei beidseits bzw. vollständig von dem Gehäuse umschlossen sein.

In einer bevorzugten Ausführungsform ist vorgesehen, dass eine Kassette durch einen Kassettenkörper und einen auf den Kassettenkörper aufgesetzten Deckel gebildet wird. Dies ermöglicht einerseits zuverlässigen Schutz vor äußeren Einflüssen, andererseits ermöglicht das Abnehmen des Deckels einen Austausch von Federn.

Im Folgenden werden bevorzugte Ausführungsformen der Erfindung anhand der Zeichnung näher beschrieben. Dabei zeigt:
- Fig. 1: eine erfindungsgemäße Wellenkupplung in Explosionsansicht;
- Fig. 2: die Wellenkupplung von vorne und im Schnitt;
- Fig. 3: ein austauschbares Modul von vorne und im Schnitt;
- Fig. 4: ein austauschbares Modul in Explosionsansicht.

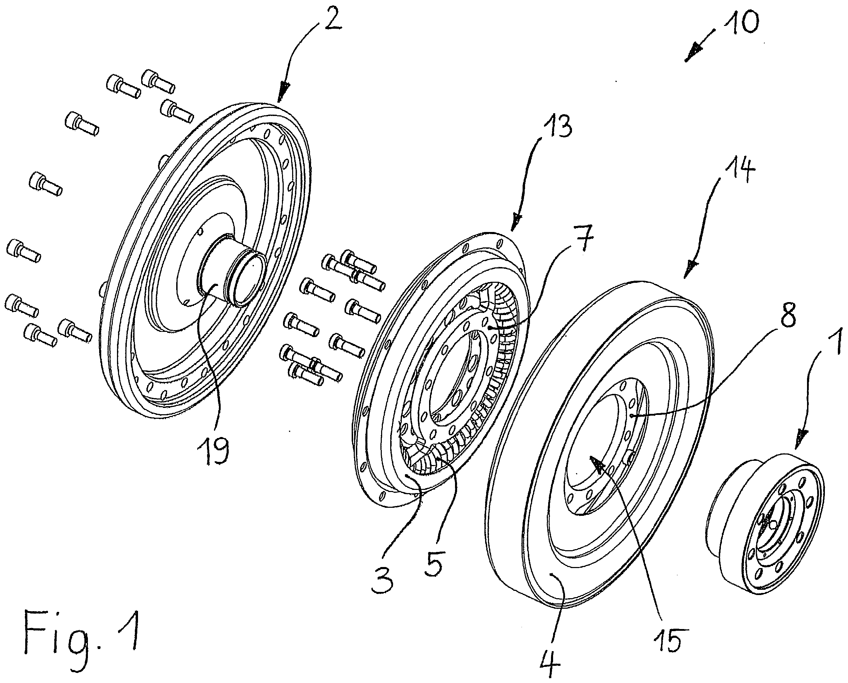

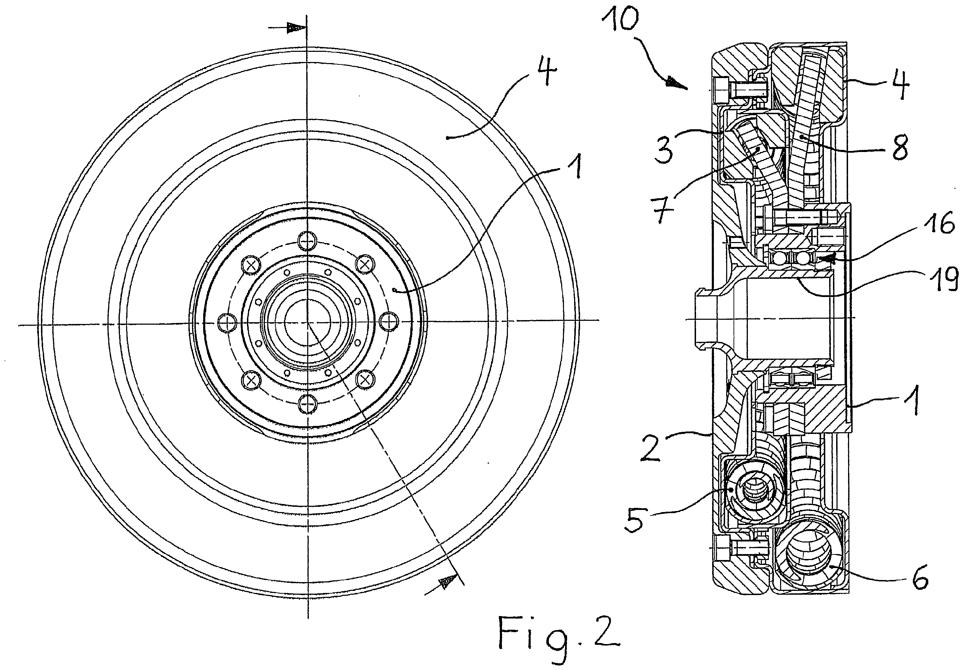

Fig. 1 und Fig. 2 zeigen eine drehelastische Wellenkupplung 10 in Explosionsansicht bzw. im Schnitt. Zwischen einem ersten Kupplungsteil 1 und einem zweiten Kupplungsteil, die gegeneinander verdrehbar gelagert sind, sind zwei (Dämpfungs-)Module 13, 14 angeordnet, die jeweils in Einem austauschbar sind. Die Module 13, 14 werden jeweils durch eine Kassette 3, 4 und eine darin gelagerte bzw. gehaltene Federanordnung 5, 6 gebildet.

Mitnehmer 7, 8 sind mit dem ersten Kupplungsteil 1 verbunden und wirken jeweils mit einer Federanordnung 3, 4 zusammen. Die Kassetten 3, 4 bzw. die Module 13, 14 sind mit dem zweiten Kupplungsteil 2 durch Schraubverbindungen lösbar verbunden. In den Fig. 1 und Fig. 2 ist ein bevorzugtes Ausführungsbeispiel mit zwei Modulen gezeigt, jedoch könnte(n) in anderen Ausführungsformen auch nur ein Modul oder mehr als zwei Module zwischen den Kupplungsteilen 1, 2 vorgesehen sein.

Der zweite Kupplungsteil 2 kann als ein- oder mehrteiliger Flansch mit Lagerzapfen 19 ausgebildet sein. Der erste Kupplungsteil 1 kann als Lagereinheit ausgebildet sein, die sowohl als Flansch für Wellen und/oder Verzahnungen als auch als Aufnahme für die (Feder)Mitnehmer 7, 8 fungiert und über ein Drehlager 16, vorzugsweise Rillenkugellager, drehbar auf dem Lagerzapfen 19 gelagert ist. Die Fixierung des ersten Kupplungsteils 1 am Lagerzapfen 19 erfolgt vorzugsweise mit einer zentralen Spannmutter.

Aus den Fig. 1 und Fig. 2 ist weiters ersichtlich, dass innerhalb der Kassette(n) 3, 4 jeweils ein mit dem ersten Kupplungsteil 1 lösbar verbundener Mitnehmer 7, 8 angeordnet ist, der Bestandteil des jeweiligen austauschbaren Moduls 13, 14 ist, d.h. im jeweiligen Modul integriert ist. Die Mitnehmer 7, 8 können entweder direkt in der Kassette oder auf einer eigenen Lagereinheit gelagert sein. Aus Fig. 2 ist zu sehen, dass beide Mitnehmer 7, 8 durch eine Schraubverbindung mit dem ersten Kupplungsteil 1 verbunden sind.

Die Kassetten 3, 4 liegen vorzugsweise unmittelbar aneinander an. Eine erste Kassette 4 kann einen größeren Außendurchmesser aufweisen als eine zweite Kassette 3, wobei die erste Kassette 4 eine Ausnehmung 9 aufweist, in der die zweite Kassette 3 eingesetzt ist (Schnitt in Fig. 2).

Die konzentrisch zueinander angeordneten Kassetten 3, 4 sind aneinander geflanscht und die innerhalb der Kassetten 3, 4 angeordneten Mitnehmer 7, 8 sind ebenfalls aneinander geflanscht. Bevorzugt wird, wenn - wie in Fig. 2 zu sehen - die aneinander liegenden Flanschflächen der Kassetten 3, 4 im Wesentlichen in derselben Ebene liegen wie die aneinander liegenden Flanschflächen der Mitnehmer 7, 8. Während die Flanschflächen der Mitnehmer 7, 8 aneinander liegen, sind die peripheren Bereiche bzw. Mitnehmerarme der Mitnehmer voneinander weg gebogen bzw. voneinander beabstandet.

Die Kassette 3 ist in der dargestellten Ausführungsform zwischen dem ersten Kupplungsteil 1 und der anderen Kassette 4 eingezwängt, so dass lediglich Befestigungsmittel (hier: Schrauben) für die Befestigung der anderen Kassette 4 an dem zweiten Kupplungsteil 2 vorzusehen sind. Eine Kassette 4 umschließt die darin gelagerte Federanordnung 5, 6 vorzugsweise von beiden Seiten bzw. vollständig.

Aus Fig. 2 ist ersichtlich, dass eine Wand der Kassette 3 zwischen der darin gelagerten Federanordnung 5 und dem zweiten Kupplungsteil 2 angeordnet ist, wodurch eine Trennung zum zweiten Kupplungsteil 2 hin geschaffen wird.

Die Kassetten 3, 4 weisen jeweils in ihrem Zentrumsbereich einen Durchgang 15 auf, in dem das Drehlager 16 (Fig. 2) zwischen erstem Kupplungsteil 1 und zweitem Kupplungsteil 2 angeordnet ist.

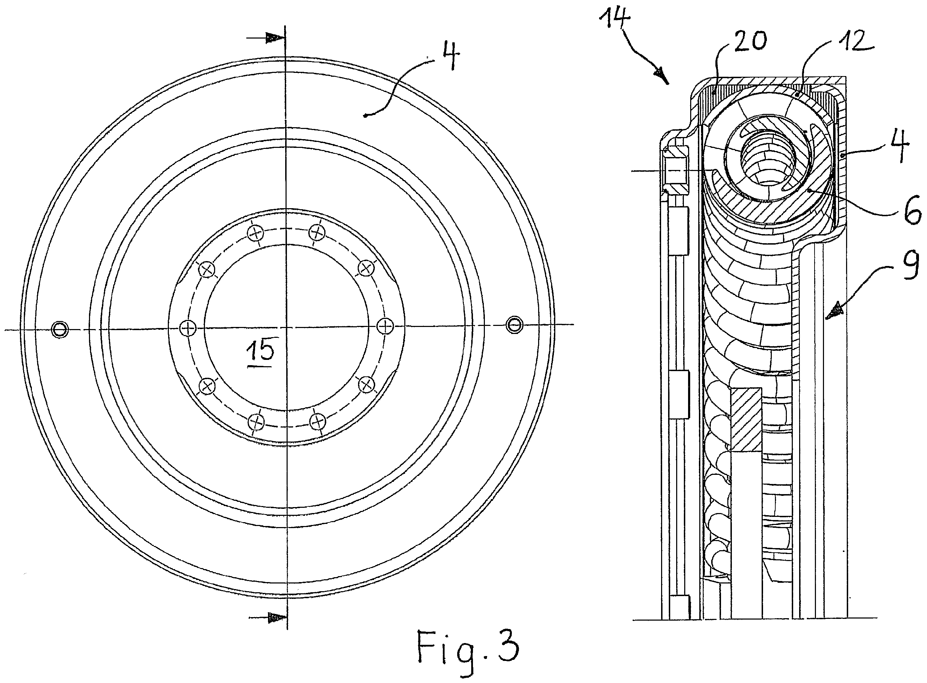

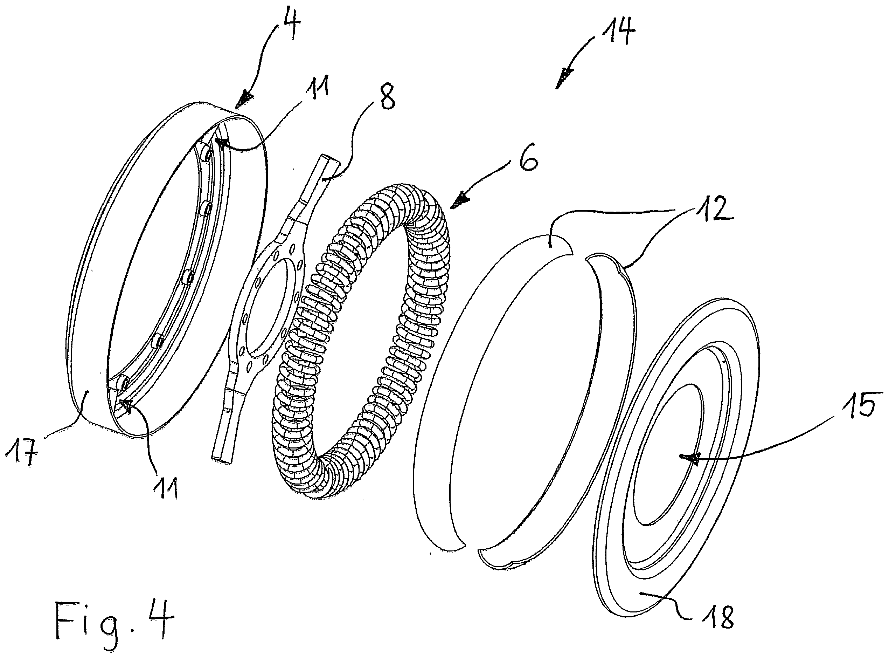

Im Folgenden wird ein austauschbares Modul 4 anhand der Figuren 3 und 4 näher beschrieben. Das Modul 4 weist eine Kassette 4 als äußere Umhüllung und darin eingesetzt: einen Mitnehmer 8, eine Federanordnung 6 (hier: aus zwei gebogenen Spiralfedern) und Federführungsbahnen 12 auf. Die Kassette 4 kann - wie hier dargestellt - in Form eines ein- oder mehrteiligen, insbesondere ringförmigen Gehäuses ausgebildet sein. Die Kassette 4 wird durch einen Kassettenkörper 17 und einen auf den Kassettenkörper 17 aufgesetzten Deckel 18 gebildet. Die Kassette(n) bzw. deren Gehäuse sind vorzugsweise aus Blech gefertigt und können Montagepunkte in Form von Löchern oder Gewinden zur Befestigung aufweisen.

An der Innenseite der Kassette 4 sind Federanschläge 11 (auch: Federauflagen oder Federstopper genannt) zum Abstützen eines Federelementes der in der Kassette gelagerten Federanordnung 6 ausgebildet. Hier umfasst die Federanordnung 6 zwei, in einer Ringform angeordnete Bogenfedern.

Die Kassette 4 kann einen Flansch und/oder Zentrierungen aufweisen, insbesondere zur Befestigung an den zweiten Kupplungsteil 2 und/oder an eine andere Kassette 3 (Vorderansicht von Fig. 3).

An den Federanschlägen 11 stützen sich Federelemente (hier: gebogene Spiralfedern) und Federführungsbahnen 12 ab. Die Federführungsbahnen 12 sind vorzugsweise aus (gehärtetem) Blech hergestellt und liegen zur Schwingungsdämpfung auf einem Fettpolster 20. D.h. der Raum zwischen der Kassettenwand und der Federführungsbahn 12 kann mit Fett gefüllt sein.

In den Federführungsbahnen 12 liegen die gebogenen Spiralfedern, die entweder einzeln oder in Paaren (Feder mit kleinem Durchmesser steckt in Feder mit großem Durchmesser; Fig. 2 und Fig. 3) verbaut werden. Die Mitnahme der Federn erfolgt über den bereits erwähnten Mitnehmer, der vorzugsweise als geschränktes Mitnehmerblech ausgebildet ist.

Die Gehäuse bzw. Deckel der Kassetten besitzen Flanschflächen mit Bohrungen und/oder Gewinden sowie Zentrierungen, die idealerweise so ausgeführt sind, dass Dämpferkassetten in Serie oder parallel mit einander verbunden werden können. Die Größen einzelner Dämpferkassetten sind dabei so gewählt dass diese ineinander passen. Dadurch können zwei oder mehrere Dämpferkassetten miteinander verbunden werden. Aufgrund der Modularität sind sowohl Parallel-(steifer) als auch Serienschaltungen (weicher) der Kassetten möglich, wodurch eine individuelle Abstimmung des Gesamtverhaltens erreichbar ist. Bei gleichen Außenmaßen können insbesondere durch die Verwendung unterschiedlicher Federstärke und Windungsanzahl Kassetten-Module mit abgestufter Drehsteifigkeit aufgebaut werden. Somit kann mit Hilfe dieses modularen Systems eine gezielte Abstimmung auf das Schwingungsverhalten erzielt werden. Die Durchmesser der Kassetten sind so aufeinander abgestimmt, dass sie baukastenartig ineinandergefügt werden können.

Die Module wurden anhand des Moduls 4 beschrieben, jedoch sind dessen Merkmale - einzeln oder zur Gänze - auch auf das andere Modul 3 übertragbar.

## Patentansprüche

1. Drehelastische Wellenkupplung (10) mit:
- einem ersten Kupplungsteil (1) und einem zweiten Kupplungsteil (2), die gegeneinander verdrehbar gelagert sind, und
- zumindest einer Federanordnung (5, 6), wobei
- die Wellenkupplung (10) zumindest eine Kassette (3, 4) aufweist, die mit dem zweiten Kupplungsteil (2) lösbar verbunden ist und in der eine Federanordnung (5, 6) gelagert ist, wobei die Kassette (3, 4) zusammen mit der darin gelagerten Federanordnung (5, 6) ein austauschbares Modul (13, 14) bildet,
**dadurch gekennzeichnet, dass** die Wellenkupplung zumindest zwei Kassetten (3, 4) aufweist, die mit dem zweiten Kupplungsteil (2) lösbar verbunden sind und in denen jeweils eine Federanordnung (5, 6) gelagert ist, wobei jede Kassette (3, 4) zusammen mit der darin gelagerten Federanordnung (5, 6) ein austauschbares Modul (13, 14) bildet und dass eine erste Kassette (4) einen größeren Außendurchmesser als eine zweite Kassette (3) aufweist, wobei die erste Kassette (4) eine Ausnehmung (9) aufweist, in der die zweite Kassette (3) eingesetzt ist und wobei die Wellenkupplung (10) zumindest einen Mitnehmer (7, 8) aufweist, der mit dem ersten Kupplungsteil (1) verbunden ist und mit der Federanordnung (5, 6) zusammenwirkt.

2. Wellenkupplung nach Anspruch 1, **dadurch gekennzeichnet, dass** innerhalb der Kassette(n) (3, 4) jeweils ein mit dem ersten Kupplungsteil (1) lösbar verbundener Mitnehmer (7, 8) angeordnet ist, der Bestandteil des jeweiligen austauschbaren Moduls (13, 14) ist.

3. Wellenkupplung nach Anspruch 1 oder 2, **dadurch gekennzeichnet, dass** die Kassetten (3, 4) aneinander anliegen.

4. Wellenkupplung nach einem der Ansprüche 1 bis 3, **dadurch gekennzeichnet, dass** die Kassetten (3, 4) aneinander geflanscht und die innerhalb der Kassetten (3, 4) angeordneten Mitnehmer (7, 8) aneinander geflanscht sind, wobei die aneinander liegenden Flanschflächen der Kassetten (3, 4) im Wesentlichen in derselben Ebene liegen wie die aneinander liegenden Flanschflächen der Mitnehmer (7, 8).

5. Wellenkupplung nach einem Ansprüche 1 bis 4, **dadurch gekennzeichnet, dass** eine Kassette (3) zwischen dem ersten Kupplungsteil (1) und einer anderen Kassette (4) eingezwängt ist.

6. Wellenkupplung nach einem Anspruch 1 bis 5, **dadurch gekennzeichnet, dass** die Kassetten (3, 4) konzentrisch zueinander angeordnet sind.

7. Wellenkupplung nach einem der vorhergehenden Ansprüche, **dadurch gekennzeichnet, dass** eine Kassette (3, 4) die darin gelagerte Federanordnung (5, 6) von beiden Seiten und/oder vollständig umschließt.

8. Wellenkupplung nach einem der vorhergehenden Ansprüche, **dadurch gekennzeichnet, dass** eine Wand der Kassette (3) zwischen der darin gelagerten Federanordnung (5) und dem zweiten Kupplungsteil (2) angeordnet ist.

9. Wellenkupplung nach einem der vorhergehenden Ansprüche, **dadurch gekennzeichnet, dass** an der Innenseite der zumindest einen Kassette (3, 4) zumindest ein Federanschlag (11) zum Abstützen eines Federelementes der in der Kassette gelagerten Federanordnung (5, 6) ausgebildet ist.

10. Wellenkupplung nach einem der vorhergehenden Ansprüche, **dadurch gekennzeichnet, dass** in zumindest einer Kassette (3, 4) zumindest eine Federführungsbahn (12) integriert ist, wobei vorzugsweise der Raum zwischen der Kassettenwand und der Federführungsbahn (12) mit Fett (20) gefüllt ist.

11. Wellenkupplung nach einem der vorhergehenden Ansprüche, **dadurch gekennzeichnet, dass** die zumindest eine Federanordnung (5, 6) zumindest eine, vorzugsweise zumindest zwei Bogenfedern umfasst.

12. Wellenkupplung nach einem der vorhergehenden Ansprüche, **dadurch gekennzeichnet, dass** die Kassette(n) (3, 4) einen Flansch und/oder Zentrierungen aufweist/-en, insbesondere zur Befestigung an den zweiten Kupplungsteil (2) und/oder an eine andere Kassette (4, 3).

13. Wellenkupplung nach einem der vorhergehenden Ansprüche, **dadurch gekennzeichnet, dass** die Kassette(n) (3, 4) jeweils in ihrem Zentrumsbereich einen Durchgang (15) aufweist/-en, in dem ein Drehlager (16) zwischen erstem Kupplungsteil (1) und zweitem Kupplungsteil (2) angeordnet ist.

14. Wellenkupplung nach einem der vorhergehenden Ansprüche, **dadurch gekennzeichnet, dass** die Kassette(n) (3, 4) in Form eines vorzugsweise ringförmigen Gehäuses ausgebildet ist/sind.

15. Wellenkupplung nach einem der vorhergehenden Ansprüche, **dadurch gekennzeichnet, dass** eine Kassette (4) durch einen Kassettenkörper (17) und einen auf den Kassettenkörper (17) aufgesetzten Deckel (18) gebildet wird.

## Claims

1. Torsionally elastic shaft coupling (10), having:
- a first coupling part (1) and a second coupling part (2) which are mounted so as to be rotatable relative to one another, and
- at least one spring arrangement (5, 6), wherein
- the shaft coupling (10) has at least one cassette (3, 4) which is detachably connected to the second coupling part (2) and in which a spring arrangement (5, 6) is mounted, wherein the cassette (3, 4), together with the spring arrangement (5, 6) mounted therein, forms an exchangeable module (13, 14),
**characterised in that** the shaft coupling has at least two cassettes (3, 4) which are detachably connected to the second coupling part (2) and in each of which a spring arrangement (5, 6) is mounted, wherein each cassette (3, 4), together with the spring arrangement (5, 6) mounted therein, forms an exchangeable module (13), 14), and **in that** a first cassette (4) has a larger outer diameter than a second cassette (3), wherein the first cassette (4) has a recess (9) into which the second cassette (3) is inserted, and wherein the shaft coupling (10) has at least one driver (7, 8) which is connected to the first coupling part (1) and interacts with the spring arrangement (5, 6).

2. Shaft coupling according to claim 1, **characterised in that** a respective driver (7, 8) which is detachably connected to the first coupling part (1) and is a component of the respective exchangeable module (13, 14) is arranged inside the cassette(s) (3, 4).

3. Shaft coupling according to claim 1 or 2, **characterised in that** the cassettes (3, 4) abut one another.

4. Shaft coupling according to one of claims 1 to 3, **characterised in that** the cassettes (3, 4) are flanged to one another and the drivers (7, 8) arranged inside the cassettes (3, 4) are flanged to one another, wherein the abutting flange faces of the cassettes (3, 4) are disposed essentially in the same plane as the abutting flange faces of the drivers (7, 8).

5. Shaft coupling according to one of claims 1 to 4, **characterised in that** a cassette (3) is wedged between the first coupling part (1) and another cassette (4).

6. Shaft coupling according to one claim 1 to 5, **characterised in that** the cassettes (3, 4) are arranged concentrically to one another.

7. Shaft coupling according to one of the preceding claims, **characterised in that** a cassette (3, 4) encloses the spring arrangement (5, 6) mounted therein from both sides and/or completely.

8. Shaft coupling according to one of the preceding claims, **characterised in that** a wall of the cassette (3) is arranged between the spring arrangement (5) mounted therein and the second coupling part (2).

9. Shaft coupling according to one of the preceding claims, **characterised in that** at least one spring stop (11) for supporting a spring element of the spring arrangement (5, 6) mounted in the cassette is formed on the inside of the at least one cassette (3, 4).

10. Shaft coupling according to one of the preceding claims, **characterised in that** at least one spring guide track (12) is integrated in at least one cassette (3, 4), wherein preferably the space between the cassette wall and the spring guide track (12) is filled with grease (20).

11. Shaft coupling according to one of the preceding claims, **characterised in that** the at least one spring arrangement (5, 6) comprises at least one, preferably at least two arc springs.

12. Shaft coupling according to one of the preceding claims, **characterised in that** the cassette(s) (3, 4) has/have a flange and/or centring means, in particular for fastening to the second coupling part (2) and/or to another cassette (4, 3).

13. Shaft coupling according to one of the preceding claims, **characterised in that** the cassette(s) (3, 4) has/have a passage (15) in its/their respective centre region, in which a pivot bearing (16) is arranged between the first coupling part (1) and the second coupling part (2).

14. Shaft coupling according to one of the preceding claims, **characterised in that** the cassette(s) (3, 4) is/are designed in the form of a preferably annular housing.

15. Shaft coupling according to one of the preceding claims, **characterised in that** a cassette (4) is formed by a cassette body (17) and a cover (18) placed on the cassette body (17).

## Revendications

1. Accouplement d'arbres élastique rotatif (10) comprenant :
- une première pièce d'accouplement (1) et une seconde pièce d'accouplement (2) qui sont montées mobiles en rotation l'une par rapport à l'autre, et
- au moins un dispositif de ressort (5, 6),
- l'accouplement d'arbres (10) comprenant au moins une cassette (3, 4) qui est reliée de manière amovible à la seconde pièce d'accouplement (2) et dans laquelle est monté le dispositif de ressort (5, 6), la cassette (3, 4) formant avec le dispositif de ressort (5, 6) monté dans celle-ci un module interchangeable (13, 14),
**caractérisé en ce que**
l'accouplement d'arbres comporte au moins deux cassettes (3, 4) qui sont reliées de manière amovible à la seconde pièce d'accouplement (2), et dans lesquelles est respectivement monté un dispositif de ressort (5, 6), chaque cassette (3, 4) formant avec le dispositif de ressort (5, 6) monté dans celle-ci un module interchangeable (13, 14), et une première cassette (4) a un plus grand diamètre externe que la seconde cassette (3), la première cassette (4) comportant un évidement (9) dans lequel est introduite la seconde cassette (3), et l'accouplement d'arbres (10) comprenant au moins un organe d'entraînement (7, 8) qui est relié à la première pièce d'accouplement (1) et coopère avec le dispositif de ressort (5, 6).

2. Accouplement d'arbres conforme à la revendication 1,
**caractérisé en ce qu'**
à la partie interne de la ou des cassette(s) (3, 4) est respectivement monté un organe d'entraînement (7, 8) relié de manière amovible à la première pièce d'accouplement (1) qui est une partie du module interchangeable (13, 14) respectif.

3. Accouplement d'arbres conforme à la revendication 1 ou 2,
**caractérisé en ce que**
les cassettes (3, 4) s'appliquent l'une sur l'autre.

4. Accouplement d'arbres conforme à l'une des revendications 1 à 3,
**caractérisé en ce que**
les cassettes (3, 4) sont bridées l'une sur l'autre et les organes d'entraînement (7, 8) montés à la partie interne des cassettes (3, 4) sont bridés l'un sur l'autre, les flancs s'appliquant l'un sur l'autre des cassettes (3, 4) étant situés essentiellement dans le même plan que les flancs s'appliquant l'un sur l'autre des organes d'entraînement (7, 8).

5. Accouplement d'arbres conforme à l'une des revendications 1 à 4,
**caractérisé en ce que**
une cassette (3) est serrée entre la première pièce d'accouplement (1) et une autre cassette (4).

6. Accouplement d'arbre conforme à l'une des revendications 1 à 5,
**caractérisé en ce que**
les cassettes (3, 4) sont concentriques.

7. Accouplement d'arbre conforme à l'une des revendications précédentes,
**caractérisé en ce qu'**
une cassette (3, 4) entoure le dispositif de ressort (5, 6) monté dans celle-ci des deux côtés et/ou totalement.

8. Accouplement d'arbres conforme à l'une des revendications précédentes,
caractérisé en qu'
une paroi de la cassette (3) est positionnée entre le dispositif de ressort (5) monté dans celle-ci et la seconde pièce d'accouplement (2).

9. Accouplement d'arbres conforme à l'une des revendications précédentes,
**caractérisé en ce que**
sur la face interne de la ou des cassette(s) (3, 4) est formée au moins une butée de ressort (11) sur laquelle peut s'appuyer un élément de ressort du dispositif de ressort (5, 6) monté dans la cassette.

10. Accouplement d'arbres conforme à l'une des revendications précédentes,
**caractérisé en ce que**
dans au moins une cassette (3, 4) est intégrée au moins une piste de guidage de ressort (12), et de préférence, le volume compris entre la paroi de la cassette et la piste de guidage de ressort (12) est rempli de graisse (20).

11. Accouplement d'arbres conforme à l'une des revendications précédentes,
**caractérisé en ce que**
le ou les dispositifs) de ressort (5, 6) comporte(nt) au moins un et de préférence au moins deux ressort(s) en arc.

12. Accouplement d'arbres conforme à l'une des revendications précédentes,
**caractérisé en ce que**
la ou les cassette(s) (3, 4) comporte(nt) une bride et/ou des organes de centrage, permettant en particulier une fixation sur la seconde pièce d'accouplement (2) et/ou sur une autre cassette (3, 4).

13. Accouplement d'arbres conforme à l'une des revendications précédentes,
**caractérisé en ce que**
la ou les cassette(s) (3, 4) comporte(nt) respectivement dans leur zone centrale un passage (15) dans lequel est monté un palier rotatif (16) entre la première pièce d'accouplement (1) et la seconde pièce d'accouplement (2).

14. Accouplement d'arbres conforme à l'une des revendications précédentes,
**caractérisé en ce que**
la ou les cassette(s) (3, 4) est(sont) réalisée(s) sous la forme d'un boîtier de préférence annulaire.

15. Accouplement d'arbres conforme à l'une des revendications précédentes,
**caractérisé en ce qu'**
une cassette (4) est formée par un corps de cassette (17) et un couvercle (18) positionné sur le corps de cassette (17).
